# EUROPÄISCHE PATENTSCHRIFT

(11) **EP 3 072 614 B1**
(45) Veröffentlichungstag und Bekanntmachung des Hinweises auf die Patenterteilung: **06.12.2017**
(21) Anmeldenummer: 15160342.0
(22) Anmeldetag: 23.03.2015
(51) Int. Cl.: B23B 51/02

(54) **BOHRER FÜR DAS BOHREN VON LAMINATEN**
DRILL FOR DRILLING LAMINATES
FORET POUR PERÇAGE DE LAMINÉS

(43) Veröffentlichungstag der Anmeldung: 28.09.2016
(73) Patentinhaber: WALTER AG, 72072 Tübingen (DE)
(72) Erfinder: Roth, Edwin, 77784 Oberharmersbach (DE)
(74) Vertreter: Jedlöv, Cecilia

(56) Entgegenhaltungen:
- DE-U1- 20 211 589
- JP-A- 2005 052 939
- US-A- 1 000 067
- US-A- 1 418 485
- US-A- 4 529 341
- US-A1- 2008 193 234

## Beschreibung

Die vorliegende Erfindung betrifft einen Bohrer gemäß dem Oberbegriff des Anspruchs 1, insbesondere für das Bohren von Laminaten, mit mindestens zwei durch entsprechende Stege voneinander getrennten Hauptspannuten, wobei die freien Stirnseiten der Stege Freiflächen bilden, und mit mindestens je einer sekundären Spannut, die im Schneidrücken jedes der Stege ausgebildet ist und die den Steg in einen Hauptsteg und einen sekundären Steg teilt, wobei durch die Schnittlinie einer Hauptspannut mit einer stirnseitigen Freifläche am Hauptsteg jeweils eine Hauptschneide gebildet wird und wobei durch die Schnittlinie der sekundären Spannut mit einer stirnseitigen Freifläche am sekundären Steg jeweils eine Sekundärschneide gebildet wird, die in Arbeitsrichtung gesehen der Hauptschneide nacheilt, wobei die Hauptschneiden sich bis zum Nennradius erstrecken.

Ein entsprechender Bohrer ist aus der US 1 000 067 A bekannt.

Aus der DE 202 11 589 U1 ist ein anderer Bohrer bekannt.

Der vorgenannte Stand der Technik DE 202 11 589 U1, von welchem die vorliegende Erfindung ausgeht, sieht dabei vor, dass die Breite der Rundschlifffasen, welche dem Umfangsmaß der sekundären Stege entspricht, ausgehend von der Bohrerspitze in Axialrichtung zunimmt. Gemäß einer Ausführungsform dieses bekannten Bohrers ist weiterhin vorgesehen, dass die Schneidenecke der Sekundärschneide im Vergleich zu der entsprechenden in Arbeitsrichtung voraneilenden Schneidenecke der Hauptschneide in axialer Richtung zurück versetzt ist.

Mit einem solchen Bohrer wird also zunächst mit der Hauptschneide eine Bohrung erzeugt, deren Wand bzw. Rand durch die nachfolgende Sekundärschneide noch eine Nachbearbeitung erfährt. Auf diese Weise sollen Grate und Ausfaserungen des durch die voraneilende Hauptschneide erzeugten Bohrlochrandes bzw. der Bohrlochwand mit Hilfe der nacheilenden Schneide beseitigt werden. Je nach der Art der bearbeiteten Laminate bzw. der Materialien, aus welchen die Laminate zusammengesetzt werden, insbesondere bei der Verwendung von Laminaten, die in erheblichem Maße harte Faserbestandteile enthalten, verschleißen die Hauptschneiden sehr schnell so dass es die Standzeit dieser herkömmlichen Bohrern innerhalb welcher sie einen sauber definierten Bohrlochdurchmesser und glatte Bohrlochränder ohne überstehende Faserreste oder Grate erzeugen relativ kurz ist.

Ein Nachteil der bekannten Bohrer besteht also vor allem darin, dass sie zwar im Neuzustand noch relativ saubere Bohrlöcher und Durchgangsbohrungen in Laminatmaterial erzeugen können, dass jedoch die Hauptschneiden vor allem auch im Bereich der Schneidecken relativ schnell verschleißen, und dadurch das zu durchbohrende Material nicht mehr sauber durchtrennen, sodass auch die anschließend auf demselben Durchmesser arbeitende Sekundärschneide einen sehr ungleichmäßigen Bohrungsrand abtragen muss, was dann nur noch unzureichend gelingt. Die vorliegende Erfindung hat sich vor diesem Hintergrund die Aufgabe gestellt, einen Bohrer der eingangs genannten Art dahingehend weiter zu verbessern, dass er eine längere Standzeit hat während welcher beim Durchbohren von Laminaten Durchmessertoleranzen der Bohrungen besser eingehalten werden und die Bohrlochränder, insbesondere auf der Austrittsseite des Bohrers, glatt und weitgehend ohne überstehende Grate oder hervorstehende Faserreste erzeugt werden können.

Für einen Bohrer der eingangs genannten Art wird diese Aufgabe gemäß Anspruch 1 dadurch gelöst, dass die Sekundärschneiden in einem Abstand zum Nennradius enden und mindestens in ihrem radial äußeren Abschnitt einen axialen Überstand bezüglich der Hauptschneide aufweisen.

Dies bedeutet, dass mindestens im Bereich der Bohrerspitze der sekundäre Steg bzw. die durch den sekundären Steg gebildete Freifläche mit der sekundären Schneide sich nicht bis zum vollen Durchmesser bzw. Radius des Bohrers erstreckt. Die äußerste Schneidecke der Sekundärschneide, die gegenüber der bis zum Nennradius reichenden Hauptschneide axial hervorsteht, liegt also auf einem etwas kleineren Radius als die Schneidecke der Hauptschneide.

Die Hauptschneide erstreckt sich dabei in Ihrem radial äußeren Abschnitt, welcher maximal der radialen Tiefe der sekundären Spannut entspricht, vorzugsweise ohne Unterbrechung bis zum Nennradius. Als Unterbrechung wird dabei insbesondere ein stufenartiger Versatz der Hauptschneide angesehen. Solche Unterbrechungen der Hauptschneide sind allerdings ohne Bedeutung, wenn sie in einem radialen Bereich liegen, der wegen der axial überstehenden Sekundärschneide ohnehin nicht aktiv mit dem Werkstück in Kontakt tritt.

Gemäß einer Ausführungsform definieren die Hauptschneiden mindestens in dem vorgenannten radial äußeren Abschnitt einen Spitzenwinkel im Bereich zwischen 60° und 170°.

Mit dem radial äußeren Abschnitt, in welchem die Hauptschneiden auf jeden Fall einen Spitzenwinkel im Bereich zwischen 60° und 170° definieren, ist dabei derjenige radiale Abschnitt der Hauptschneiden gemeint, der unmittelbar vor der radialen Position beginnt, an welcher ein axialer Überstand der Sekundärschneide vorliegt, und der bis zum Nennradius reicht wobei wiederum dauerhaft inaktive Abschnitte der Hauptschneide außer Betracht bleiben können. Solche dauerhaft inaktiven Abschnitte sind insbesondere diejenigen radialen Abschnitte der Hauptschneide, in denen die Sekundärschneide jeweils den größten axialen Überstand aufweist.

Der Abstand der Schneidecke der Sekundärschneide vom Nennradius sollte beispielsweise zwischen 0,2% und 5% des Bohrerdurchmessers und in absoluten Zahlen zwischen 0,01 mm und 0,2 mm liegen. Konkret hat sich ein Abstand von 0,05 mm als gut geeignet erwiesen.

Konkret bedeutet dies, dass die Sekundärschneide in der Nähe der späteren Bohrlochwand bzw. in der Nähe des späteren Bohrlochrandes aufgrund ihres axialen Überstandes bereits eine umlaufende Vertiefung Nut bzw. bei Durchgangsbohrungen bereits einen ringförmigen Durchbruch in dem betreffenden Material erzeugt, sodass die in Arbeitsrichtung zwar voraneilende, axial jedoch bezüglich der Sekundärschneide zurückversetzte Hauptschneide jedenfalls in dem radial äußeren Bereich der Bohrung nur noch eine dünne Materialschicht von der Bohrlochwand und vom Bohrlochrand abtragen muss, was im Ergebnis trotz eines gewissen Verschleißes der Sekundärschneide zu präzise und mit sauber definierten Kanten hergestellten Bohrungen, insbesondere Durchgangsbohrungen führt.

Für manche Laminatmaterialien hat es sich dabei als zweckmäßig erwiesen, wenn zusätzlich an einem bzw. an jedem sekundären Steg erfindungsgemäß noch eine tertiäre Schneide vorgesehen ist, die sowohl bezüglich der Hauptschneide als auch bezüglich der Sekundärschneide axial zurückversetzt ist und in der Projektion auf eine Radialebene den radialen Abstand der radial äußeren Ecke der Sekundärschneide zum Nennradius des Bohrers überbrückt. Konkret ist also der sekundäre Steg ähnlich wie bei einem Stufenbohrer ausgebildet und hat im Anschluss an die Spitze, wo die Sekundärschneide ausgebildet ist, einen etwas kleineren Radius, der sich dann in einem axialen Abstand von der Spitze, der größer ist als der Überstand der Sekundärschneide gegenüber der Hauptschneide und zum Beispiel zwischen 0,5 mm und 1,5 mm betragen kann, stufenartig auf den Nennradius erweitert, wobei an diesem und durch diesen stufenförmigen Übergang die tertiäre Schneide gebildet wird.

Der axiale Überstand der Sekundärschneide gegenüber der Hauptschneide hat beispielsweise einen Betrag zwischen 0,1 mm und 0,8 mm, wobei in einer Ausführungsform der Erfindung dieser axiale Überstand entlang der Sekundärschneide mit zunehmendem Radius größer wird. Insbesondere kann dabei auch die radiale Länge der sekundären Schneide auf einen vergleichsweise kleineren Radiusbereich beschränkt sein, wo nämlich der entsprechende axiale Überstand vorliegt. Diese radiale Länge der sekundären Schneide beträgt insbesondere weniger als die Hälfte des Bohrerradius' und vorzugsweise weniger als ein Drittel des Bohrerradius'.

Der für die Hauptschneiden definierte Spitzenwinkel des Bohrers ist wie üblich der in der Spitze des Bohrers auf der Innenseite gemessene Winkel zwischen gegenüberliegenden Hauptschneiden. Allgemeiner gesprochen ist er definiert als das Doppelte des auf der Innenseite des Bohrers gemessenen Winkels zwischen einer Projektion der Hauptschneide auf eine die Achse des Bohrers enthaltende Ebene und dieser Achse. Dabei kann dieser Spitzenwinkel über die Länge der Schneide hinweg variieren, bleibt aber zweckmäßigerweise mindestens in dem radialen äußeren Bereich der Hauptschneide, welcher unmittelbar vor dem Radiusbereich des axialen Überstandes der sekundären Schneide beginnt und sich bis zum Nennradius erstreckt, immer in dem oben definierten Winkelbereich von 60° und 170° (jeweils für das Doppelte des zwischen dem jeweiligen Hauptschneidenabschnitt und der Achse eingeschlossenen Winkels).

Im Unterschied zu der Hauptschneide ist gemäß einer Ausführungsform der Erfindung für die Sekundärschneiden vorgesehen, dass sie über ihre Länge hinweg unter einem Spitzenwinkel zwischen 180° und 200° verlaufen. Dies entspricht einer sogenannten Hohlspitze, das heißt radial weiter außen liegende Abschnitte der Sekundärschneiden liegen axial vor radial weiter innen liegenden Abschnitten der Sekundärschneide, sodass der auf der Innenseite des Bohrers gemessene Winkel zwischen der Bohrerachse und einem Abschnitt der Sekundärschneide 90° oder größer wird und somit der Spitzenwinkel über 180° beträgt, vorzugsweise aber einen Wert von 200° nicht überschreitet.

Dies bedeutet weiterhin, dass der axiale Überstand der Sekundärschneide an der radial äußersten Ecke der Sekundärschneide am größten ist und für weiter radial innen liegende Abschnitt der Sekundärschneide immer kleiner wird und schließlich verschwindet, da wegen des Spitzenwinkels von maximal 170° die radial innen liegenden Abschnitte der Hauptschneide im Verlauf der Hauptschneide von außen nach innen axial weiter vorn liegen.

Im Verlaufe der Schneiden von außen nach innen wird daher bei einer solchen Kombination der Spitzenwinkel von Hauptschneiden und Sekundärschneiden der axiale Überstand der sekundären Schneide zunehmend kleiner und verschwindet schließlich ganz, sodass eine sich darüber hinaus radial noch weiter einwärts erstreckende Sekundärschneide keinerlei Funktion mehr hat und der weitere Verlauf der Sekundärschneide in Richtung der Achse Bohrers ohne Belang ist. Zweckmäßigerweise wird man die Freifläche des Steges und insbesondere des sekundären Steges in Richtung Achse des Bohrers soweit wie möglich axial nach vorn zu Spitze des Bohrers hin ansteigen lassen, um die Spitze möglichst gut zu stabilisieren. Die Sekundärschneide kann damit auf einen kleinen radial äußeren Abschnitt begrenzt werden, der typischerweise zwischen dem halben Nennradius und etwas weniger als den vollen Nennradius liegt, und zumeist innerhalb des Bereiches von ¾ des Nennradius bis nahe an den vollen Nennradius liegt.

Bei dieser Ausgestaltung mit einem Spitzenwinkel von beispielsweise mehr als 180° für die sekundären Schneiden bilden die radial äußeren Schneidecken der Sekundärschneiden den axial am weitesten vorn liegenden Schneidenteil und die Sekundärschneide erzeugt im Bereich des axialen Überstandes über die Hauptschneide beim Bohren in das zu bohrende Material eine ringförmige Nut, deren tiefster Grund in der Nähe des Nennradius' liegt. Radial weiter innen arbeitet die Hauptschneide und erzeugt ein zentrales Loch. Beim Herstellen einer Durchgangsbohrung wird daher die Bohrerspitze im Allgemeinen zunächst im Zentrum der Bohrung das Material durchstoßen und bevor der volle Bohrradius erreicht wird schneidet die Sekundärschneide eine ringförmige Nut in der Nähe des Nennradius und erzeugt einen Durchbruch in der Nähe des endgültigen Umfangs der Durchgangsbohrung, sodass sich beim Durchstoßen des Materials ein ring- oder scheibenförmiger Materialabschnitt löst, der nahezu den Nenndurchmesser der Bohrung hat, während anschließend die radial äußere Schneidecke der Hauptschneide noch eine dünne Schicht am Rand der Bohrung abträgt.

Das Erzeugen der ringförmigen Nut führt beispielsweise bei der Durchbohrung von Laminaten mit Fasermaterial zu einem guten Durchtrennen der Fasern im Bereich der Schneidecke der sekundären Schneide, was insbesondere dadurch gut gelingt, dass Fasern, welche über den Querschnitt der Bohrung hinweg verlaufen, beiderseits der durch die Sekundärschneide erzeugten Nut noch verankert sind und damit nicht aus dem Material herausgerissen werden, sondern glatt durchtrennt werden, während bei einem schrittweisen Erweitern einer zentralen Bohrung zunächst im Zentrum die Fasern gelockert werden und anschließend beim Erweitern der Bohrung nicht ohne weiteres vom Bohrungsrand abgetrennt werden können.

Die verbleibend dünne Materialschicht am Rand der Bohrung wird dann durch die nachfolgende Schneidecke der Hauptschneide abgetragen. Die tertiäre Schneide kann anschließend noch zur Glättung und zum Abtragen überstehender Reste oder Grate beitragen.

Da bei dem erfindungsgemäßen Bohrer der größte, zentrale Teil der Bohrung durch die Hauptschneide erzeugt wird und die Sekundärschneide nur einen relativ schmalen, Ring- bzw. Hohlzylinderabschnitt des zu durchbohrenden Material abträgt, wirkt sich ein Verschleiß des zentralen Teiles der Hauptschneide effektiv nicht auf den zunächst entstehenden Bohrungsrand aus, da die Schneidecke der sekundären Schneide nur noch eine dünne Materialschicht an der Bohrungswand hinterlässt, die von der Schneidecke der Hauptschneide abzutragen ist.
Ein weiterer Vorteil liegt darin, dass der Spitzenwinkel der sekundären Schneide nur geringfügig von 180° abweicht, was zu einer geringeren Belastung der Schneidecke der Sekundärschneide beiträgt.

Die Hauptschneiden verlaufen in einer Sicht entlang der Bohrerachse mindestens im Bereich ihrer radial äußeren Hälfte konkav, was mit der entsprechenden Ausbildung der Spannut zusammenhängt und was es ermöglicht, die an die Hauptschneide angrenzende und sich am Umfang des Bohrers erstreckende primäre Nebenschneide mit einem positiven Spanwinkel zu versehen.

Dagegen haben die an die Sekundärschneiden anschließenden sekundären Nebenschneiden einen negativen radialen Spanwinkel, vorzugsweise im Bereich zwischen 0 und -10°. Dies dient unter anderem der Erhalt der Stabilität des ansonsten sehr schmalen, sekundären Steges und ermöglicht auch einen eher schabenden und glättenden Schnitt der sekundären Nebenschneide, die an die bereits erwähnte tertiäre Schneide am sekundären Steg anschließt.

In einer Ausführungsform der Erfindung beträgt der Umfangswinkel zwischen einer primären Nebenschneide und einer dieser in Arbeitsrichtung nacheilenden sekundären Nebenschneide beispielsweise etwa 65° und ist damit deutlich kleiner als der Umfangswinkel zwischen der sekundären Nebenschneide und der dieser jenseits der nachfolgenden Hauptspannut unmittelbar nacheilenden primären Nebenschneide, der etwa 115° beträgt. Die Differenz dieser Umfangswinkel liegt bei einem Bohrer mit zwei Hauptschneiden bei mindestens 30° und bei höchstens etwa 70°. Es versteht sich, dass entsprechende Bohrer auch mit jeweils drei Hauptschneiden und drei Hauptspannuten und der entsprechenden Anzahl von sekundären Schneiden und sekundären Spannuten ausgestattet werden könnte, wobei sich der zwischen zwei aufeinanderfolgenden Hauptschneiden zur Verfügung stehende Umfangswinkel von 180 auf 120° verkleinern würde. Entsprechend würden sich dann auch die obigen Umfangswinkel und auch die Differenz der Umfangswinkel zwischen Hauptschneiden und sekundärer Schneiden oder genauer gesprochen zwischen den primären Nebenschneide und der sekundären Nebenschneiden auf einen Wert von etwa zwei Drittel der vorstehend genannten Winkeldifferenzen verkleinern.

Weiterhin beträgt gemäß einer Ausführungsform des erfindungsgemäßen Bohrers die in einer Schnittebene senkrecht zur Bohrerachse gemessene Querschnittsfläche der Hauptspannuten mindestens das Doppelte und vorzugsweise mindestens das Dreifache der Querschnittsfläche der sekundären Spannuten.

Dies trägt insbesondere auch der Tatsache Rechnung, dass ein Großteil des zerspanten Materials von der Hauptschneide erzeugt wird und durch die Hauptspannut abzutransportieren ist, während die sekundären Schneiden nur relativ wenig Material in der Nähe des äußeren Randes der Bohrung abtragen, das auch durch eine Spannut mit entsprechend kleinerem Querschnitt gut abtransportiert werden kann.

Ein effektiver Transport der Späne kann auch dadurch begünstigt werden, dass der Bohrer als Spiralbohrer ausgebildet ist, auch wenn dies insbesondere beim Bohren von Laminaten, welche relativ dünne Platten bilden, nur von geringerer Bedeutung ist.

Bei einem Spiralbohrer sollte der Drallwinkel der Nebenschneiden, und zwar sowohl der primären als auch der sekundären Nebenschneiden, mindestens 20° und höchstens 60° betragen. Da sowohl die primären als auch die sekundären Nebenschneiden entlang desselben Bohrersteges verlaufen und im Wesentlichen nur durch die sekundäre Spannut und den Spanrücken der primären Nebenschneide getrennt sind, könnte es ohnehin nur sehr geringe Abweichungen des Drallwinkels von primärer und sekundärer Nebenschneide geben, wobei der Drallwinkel der Nebenschneiden, abhängig von dem zu durchbohrenden Werkstoff, durchaus noch Einfluss auf die Glätte der erzeugten Wand einer Bohrung haben kann.

Alternativ kann der Bohrer aber auch einen kleineren Drallwinkel haben oder ein gerade genuteter Bohrer mit Drallwinkel Null sein.

In einer Ausführungsform weist außerdem die Spitze des Bohrers Ausspitzungen des Bohrerkerns auf. Dies führt effektiv zu einer Verkürzung der Querschneide im Zentrum des Bohrers und trägt so zu einer besseren Zentrierung beim Anbohren und einem besseren Eindringen der Bohrerspitze in das zu durchbohrende Material bei.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 eine Seitenansicht des erfindungsgemäßen Bohrers.
Figuren 2 und 3 vergrößerte Seitenansichten der Bohrerspitze aus verschiedenen Blickwinkeln
Figur 4 eine stirnseitige Draufsicht auf die Spitze einer Ausführungsform des erfindungsgemäßen Bohrers
Figuren 4a und 4b Ausschnitte aus Figur 4
Figur 5 eine schematisches Bohrprofil.

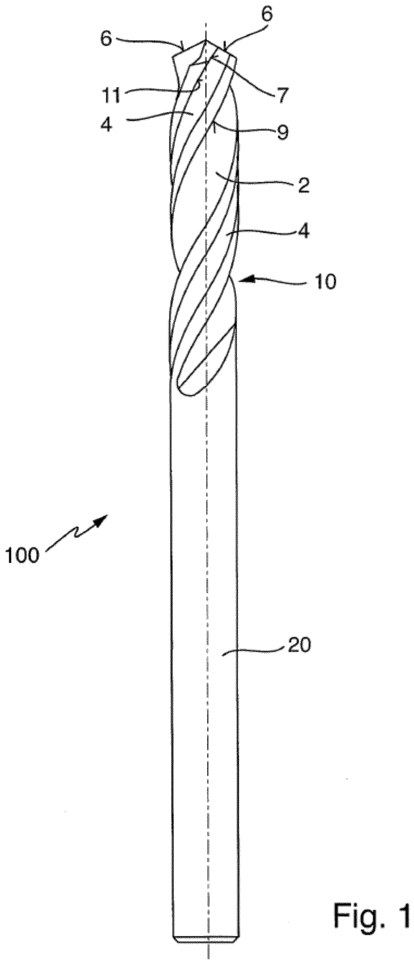

In Figur 1 erkennt man in einer Seitenansicht einen Bohrer 100 gemäß der vorliegenden Erfindung, welcher einen Schaft 20 und einen Spannutenabschnitt 10 aufweist. Der Spannutenabschnitt 10 ist gekennzeichnet durch schraubenförmig umlaufende Hauptspannuten 2 und sekundäre Spannuten 4, die jeweils durch primäre Nebenschneiden 9 und sekundäre Nebenschneiden 11 begrenzt werden. Der Drallwinkel, d.h. der in der Seitenansicht oder in einer ebenen Abwicklung der Umfangsfläche des Bohrers zwischen den Nebenschneiden 9 bzw. 11 und der Achse 50 eingeschlossene Winkel liegt in der Größenordnung von 30°.

Der Spitzenwinkel des Bohrers 100, d.h. der Winkel zwischen den in der Seitenansicht hier geradlinig verlaufenden Hauptschneiden 6, beträgt hier etwa 130°.

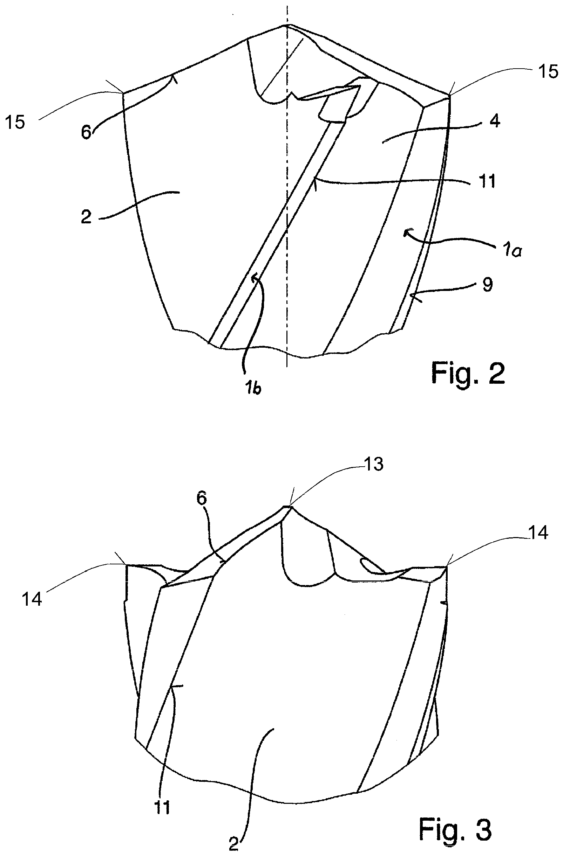

Weitere Details der Bohrerspitze sind in Figur 1 nicht dargestellt und besser in den folgenden Detailansichten der Figuren 2 - 5 erkennbar.

Figur 2 zeigt eine vergrößerte Seitenansicht der Bohrerspitze. Man erkennt die Hauptspannut 2 und die sekundäre Spannut 4, welche den Steg in einen Hauptsteg 1a und einen sekundären Steg 1b teilt, mit primären Nebenschneiden 9 und sekundären Nebenschneiden 11 entlang der Schnittlinie der Spannuten 2 bzw. 4 mit der Umfangsfläche am Schneidrücken des Bohrers. Der Hauptsteg könnte auch eine die einhüllende Fläche des Bohrers definierende Rundfase aufweisen und im Übrigen radial nach innen versetzt sein, um einerseits eine präzise Führung im Bohrloch zu gewährleisten, andererseits aber auch die Reibung an der Bohrlochwand zu reduzieren.

Die Seitenansicht der Figur 2 entspricht einer Blickrichtung, die dem Verlauf einer Tangente an die radial äußere Freifläche der Hauptspannut im Bereich der Schneidecke 15 entspricht.

Figur 3 zeigt eine analoge Ansicht entlang einer Tangente an die Freifläche der sekundären Spannut 4 im Bereich der Schneidecke 14.

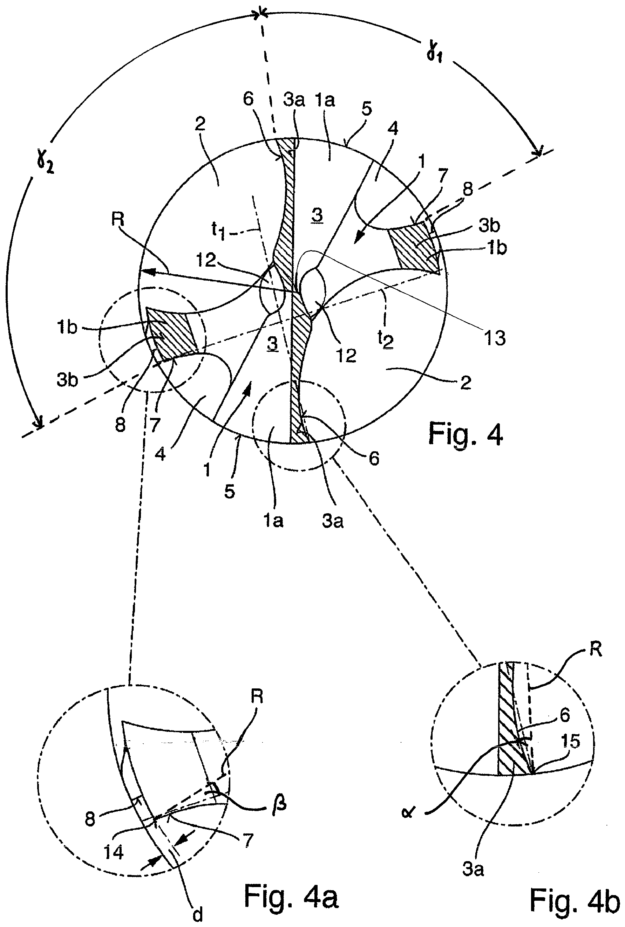

Anhand der stirnseitigen Draufsicht mit Blickrichtung entlang der Achse des erfindungsgemäßen Bohrers gemäß Figur 4 werden nunmehr wesentliche Details dieses Bohrers beschrieben.

Der Bohrer weist zwei diametral gegenüberliegende und gemäß Figur 1 schraubenförmig umlaufende Hauptspannuten 2 auf, die durch entsprechende Stege 1, welcher einander ebenfalls diametral gegenüberliegen und dem schraubenförmigen Verlauf der Hauptspannuten 2 folgen, getrennt sind. Diese Stege 1 sind wiederum durch eine sekundäre Spannut 4 getrennt in einen Hauptsteg 1a und einen sekundären Steg 1b.

Die stirnseitige Fläche 3 der Stege 1 definiert hier schraffiert dargestellte Hauptfreiflächen 3a und sekundäre Freiflächen 3b, wobei die Hauptschneide 6 gebildet wird durch die Schnittlinie der Hauptfreifläche 3a mit einer Hauptspannut 2 und die Sekundärschneide 7 gebildet wird durch die Schnittlinie der sekundären Freifläche 3b mit der sekundären Spannut 4. Die Freiflächen 3a und 3b sind, abgesehen von einem kleinen, aber notwendigen Freiwinkel, annähernd Abschnitte von konischen Flächen, wie sie durch als Rotationsfläche der entsprechenden umlaufenden Hauptschneiden 6 und Sekundärschneiden 7 erzeugt werden würden. Die übrigen Abschnitte der stirnseitigen Fläche 3 der Stege 1 sind axial in Richtung des Schaftes 20 deutlicher abgeschrägt bzw. abgeflacht oder zurückversetzt und liegen axial auf jeden Fall innerhalb bzw. in Achsrichtung von der Spitze des Bohrers aus gesehen hinter den Freiflächen 3a und 3b und den durch die Hauptschneiden 6 und sekundären Schneiden 7 definierten Rotationsflächen.

Der Umfangswinkel y1 zwischen einer primären Nebenschneide 9 und einer dieser in Arbeitsrichtung unmittelbar nacheilenden sekundären Nebenschneide 11 ist kleiner als der Umfangswinkel y2 zwischen einer sekundären Nebenschneide 11 und der dieser unmittelbar nacheilenden primären Nebenschneide 9.

Im Zentrum des Bohrers erkennt man noch Ausspitzungen 12, welche die Querschneide 13 an der Bohrerspitze gegenüber einem entsprechenden Bohrer ohne Ausspitzungen verkürzen und so zu einer besseren Zentrierung des Bohrers beitragen. Unter Ausspitzungen versteht man dabei an der Bohrerspitze vorgesehene Aussparungen des Bohrerkerns, der ansonsten durch einen zentralen, in den Bohrer einbeschriebenen zylindrischen Körper definiert wird, der durch den Grund der Hauptspannuten 2 (ohne die Ausspitzungen 12) begrenzt wird. Die Ausspitzungen 12 können zum Beispiel durch Ausschleifen des Bohrerkerns an der Stirnfläche des Bohrers hergestellt werden. Der Bohrer besteht vorzugsweise aus Vollhartmetall und kann auch eine oder mehrere Beschichtungen aufweisen, welche die Verschleißfestigkeit erhöhen, gegebenenfalls auch den Spantransport in den Spannuten verbessern und auch zu einer besseren Oberflächenqualität der Bohrung beitragen können.

Die Hauptschneide 6 erstreckt sich radial nach außen kontinuierlich bis hin zu einer Schneidecke 15 am Außenumfang des Bohrers, der durch den Radius R definiert wird. Die Sekundärschneide 7 hingegen beginnt erst in einem größeren Abstand zum Zentrum des Bohrers (beginnend am radial inneren Ende der in Figur 4 schraffiert dargestellten Freifläche 3b) und erstreckt sich radial nach außen nur bis zur einer Schneidecke 14 im Abstand d an den durch den Radius R definierten Umfang des Bohrers heran, wobei dieser Abstand d in der Größenordnung von wenigen Hundertstel- bis wenigen Zehntelmillimetern liegen sollte. Details der sekundären Schneide 7 erkennt man in dem vergrößerten Ausschnitt 4a aus Figur 4. Gegenüber der Sekundärschneide 7 erkennt man außerdem noch eine axial zurückversetzte tertiäre Schneide 8, die genau den verbleibenden Abstand d der sekundären Schneide 7 zum Radius R überbrückt.

Während jedoch die Sekundärschneide 7 in Axialrichtung gesehen mindestens in ihrem radial äußeren Abschnitt in Vorschubrichtung gesehen axial vor der Hauptschneide 6 liegt, ist die tertiäre Schneide 8 an dem sekundären Steg 1b axial so weit zurück versetzt, dass sie axial hinter der Hauptschneide 6 liegt.

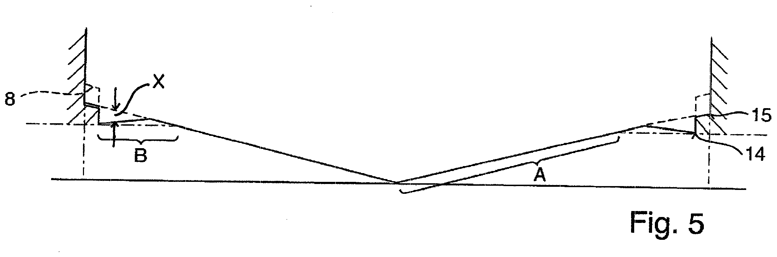

Das Schneidenprofil der in eine gemeinsame Ebene projizierten Hauptschneide 6, der sekundären Schneide 7 und der tertiären Schneide 8 im axial äußeren Bereich des Bohrers ist in Figur 5 erkennbar.

In den vergrößerten Ausschnitten der Figuren 4a und 4b erkennt man weiterhin, dass der radiale Spanwinkel α der Hauptschneide 6, der gleichzeitig der Spanwinkel der Nebenschneide 9 ist, die im Bereich der radial äußersten Schneidecke der Hauptschneidekante 6 ansetzt, positiv ist, d.h. eine Tangente t₁ an die Hauptschneide 6 im Bereich der radial äußersten Schneidecke durchschneidet den Bohrerdurchmesser links von, d. h. in Arbeitsrichtung hinter, der zentralen Ache 50 und schließt den Winkel α mit einem Radiusvektor zur Schneidecke 15 ein (siehe Figur 4b). (Die Tangente t₁ ist in den Figuren 4 und 4b nicht präzise als Tangente an die Spanfläche im Bereich der Schneidecke 15 gezeichnet, da sie bei der gleichmäßig konkaven Krümmung der Hauptschneidkante 6 eigentlich als Ganzes hinter der Schneidkante 6 liegen sollte.)

Der radiale Spanwinkel β der sekundären Schneide 7 und der tertiären Schneide 8, der gleichzeitig der radiale Spanwinkel der sekundären Nebenschneide 11 ist, ist hingegen negativ, d.h. eine Tangente t₂ an die Sekundärschneide 7 im Bereich ihrer äußeren Schneidecke 14 (siehe Figuren 4, 4a) durchschneidet den Bohrer in Dreh- bzw. Arbeitsrichtung gesehen vor der Achse 50 und schließt den Winkel β mit einem Radiusvektor zur Schneidecke 14 ein (siehe Figur 4a).

Der axiale Abstand zwischen der sekundären Schneide 7 und der tertiären Schneide 8 liegt typischerweise im Bereich von einigen Zehntelmillimetern, kann aber auch bis zu 1 oder 2 mm betragen.

Der axiale Spanwinkel von Hauptschneide 6 und sekundärer Schneide 7 ist jeweils positiv.

Anhand des Bohrerprofils in Figur 5 erkennt man, dass der Bohrer beispielsweise beim Durchbohren eines plattenförmigen Laminates zunächst im Zentrum mit der Spitze durch das zu durchbohrende Material hindurchtritt (siehe horizontale durchgezogene Linie), wobei die sich auf der Austrittseite bildende Öffnung zunächst vom Zentrum her zunehmend vergrößert.

Bevor jedoch die zentrale Öffnung den Außenbereich der Bohrung erreicht, erfolgt der Durchbruch im Bereich nahe des Außendurchmessers des Bohrers (siehe horizontale gestrichelte Linie) zunächst durch die am weitesten vorstehende Schneidecke 14 der sekundären Schneide 7, die damit einen zuvor noch verbliebenen ringförmigen Abschnitt der Breite B des Materials am Ende der Bohrung heraustrennt. Je nach Material kann es jedoch auch sein, dass das vor dem Durchstoßen der Bohrerspitze verbleibende Material im Zentrum der Bohrung axial weggedrängt wird, so dass sich die Breite B deutlich vergrößert oder sogar als komplette vom Zentrum bis zur Schneidecke 114 reichende Scheibe abgetrennt wird. Dieses Abtrennen eines Ringes oder einer Scheibe an der Schneidecke 14 führt effektiv zu einem guten Abriss bzw. einem guten Durchtrennen etwaiger Fasern sehr nahe an dem Außenradius des Bohrers R, wobei dann die verbleibende dünne Materialschicht durch die Schneidecke 15 der Hauptschneide 6 abgetragen wird und die tertiäre Schneide 8 schließlich eine Glättung und Nachbearbeitung der Wandfläche und Randfläche der Bohrung bewirkt.

Dies führt dazu, dass die Hauptschneide des Bohrers in dem Bereich, in welchem die Sekundärschneide 7 axial um eine von Ihnen nach außen zunehmenden Betrag X übersteht, weitgehend geschont wird, wobei aufgrund des geringen radialen Überstandes d der Hauptschneide gegenüber der sekundären Schneide 7 auch die Schneidecke 15 der Hauptschneide 6 nur wenig belastet wird. Dieser Effekt ist solange wirksam, wie die Sekundärschneide 7 einen ausreichenden axialen Überstand gegenüber der Hauptschneide 6 hat, und erst bei entsprechendem Verschleiß der sekundären Schneide 7, durch welchen die Sekundärschneide 7 axial so weit verkürzt ist, dass sie auf nahezu gleichem Niveau wie die Hauptschneide liegt, ist ein Nachschleifen und Schärfen des Bohrers erforderlich.

## Patentansprüche

1. Bohrer, insbesondere für das Bohren von Laminaten, mit mindestens zwei durch entsprechende Stege (1) voneinander getrennten Hauptspannuten (2), wobei die freien Stirnseiten der Stege (1) Freiflächen (3) bilden, und mit mindestens je einer sekundären Spannut (4), die in dem Schneidrücken (5) jedes der Stege (1) ausgebildet ist und die den Steg (1) in einen Hauptsteg (1a) und einen sekundären Steg (1b) teilt, wobei durch die Schnittlinie einer Hauptspannut (2) mit einer Freifläche (3a) am Hauptsteg (1a) jeweils eine Hauptschneide (6) gebildet wird, und wobei durch die Schnittlinie der sekundären Spannut (4) mit einer Freifläche (3b) am sekundären Steg (1b) jeweils eine Sekundärschneide (7) gebildet wird, die in Arbeitsrichtung gesehen der Hauptschneide (6) nacheilt, wobei die Hauptschneiden (6) sich bis zum Nennradius (R) erstrecken, und wobei die Sekundärschneiden (7) in einem Abstand (d) vor dem Nennradius enden und mindestens in ihrem radial äußeren Abschnitt einen axialen Überstand (X) bezüglich der Hauptschneide aufweisen, **dadurch gekennzeichnet, dass** eine tertiäre Schneide (8) am sekundären Steg (1b) bezüglich der Hauptschneide (6) und bezüglich der Sekundärschneide (7) axial zurückversetzt ist und in der Projektion auf eine Radialebene den radialen Abstand (d) von der radial äußeren Ecke der Sekundärschneide (7) zum Nennradius (R) des Bohrers überbrückt.

2. Bohrer nach einem der vorstehenden Ansprüche, **dadurch gekennzeichnet, dass** der Abstand (d) zwischen 0,2% und 5% des Bohrerdurchmessers liegt oder in absoluten Zahlen zwischen 0,01 mm und 0,2 mm beträgt.

3. Bohrer nach einem der vorstehenden Ansprüche, **dadurch gekennzeichnet, dass** die Hauptschneiden mindestens in ihrem gesamten radial äußeren Abschnitt einen Spitzenwinkel im Bereich zwischen 60° und 170° definieren.

4. Bohrer nach einem der vorstehenden Ansprüche, **dadurch gekennzeichnet, dass** der axiale Überstand (X) einen Betrag zwischen 0,1 mm und 0,8 mm hat.

5. Bohrer nach einem der vorstehenden Ansprüche, **dadurch gekennzeichnet, dass** der axiale Überstand (X) entlang der Sekundärschneide mit zunehmendem Radius größer wird.

6. Bohrer nach einem der vorstehenden Ansprüche, **dadurch gekennzeichnet, dass** die radiale Länge der sekundären Schneide (7) weniger als die Hälfte des Bohrerradius (R) und insbesondere weniger als ein Drittel des Bohrerradius beträgt.

7. Bohrer nach einem der vorstehenden Ansprüche, **dadurch gekennzeichnet, dass** die Sekundärschneiden (7) über Ihre Länge hinweg unter einem Spitzenwinkel zwischen 180° und 200° verlaufen.

8. Bohrer nach einem der vorstehenden Ansprüche, **dadurch gekennzeichnet, dass** die Hauptschneiden in der Draufsicht entlang der Bohrerachse (50) mindestens im Bereich ihrer radial äußeren Hälfte konkav ausgebildet sind.

9. Bohrer nach einem der vorstehenden Ansprüche, **dadurch gekennzeichnet, dass** die an die Hauptschneiden (6) anschließenden primären Nebenschneiden (9) einen positiven radialen Spanwinkel (α) aufweisen.

10. Bohrer nach einem der vorstehenden Ansprüche, **dadurch gekennzeichnet, dass** die an die Sekundärschneiden (7) anschließenden sekundären Nebenschneiden (11) einen negativen radialen Spanwinkel (β), vorzugsweise zwischen 0 und -10°, aufweisen.

11. Bohrer nach einem der vorstehenden Ansprüche, **dadurch gekennzeichnet**, das der Umfangswinkel (y1) zwischen einer primären Nebenschneide (9) und einer dieser in Arbeitsrichtung unmittelbar nacheilenden sekundären Nebenschneide (11) kleiner ist als der Umfangswinkel (y2) zwischen einer sekundären Nebenschneide und der dieser unmittelbar nacheilenden primären Nebenschneide.

12. Bohrer nach einem der vorstehenden Ansprüche, **dadurch gekennzeichnet, dass** die Differenz (γ2 - γ1) der Umfangswinkel bei einem Bohrer mit zwei Hauptschneiden mindestens 40 Grad beträgt.

13. Bohrer nach einem der vorstehenden Ansprüche, **dadurch gekennzeichnet, dass** die Differenz (γ2 - γ1) der Umfangswinkel bei einem Bohrer mit zwei Hauptschneiden höchstens 70 Grad beträgt.

14. Bohrer nach einem der vorstehenden Ansprüche, **dadurch gekennzeichnet, dass** in einer Schnittebene senkrecht zur Bohrerachse die Querschnittsfläche der Hauptspannnuten mindestens das Doppelte, vorzugsweise mindestens das Dreifache der Querschnittsfläche der sekundären Spannuten beträgt.

15. Bohrer nach einem der vorstehenden Ansprüche, **dadurch gekennzeichnet, dass** der Bohrer als Spiralbohrer ausgebildet ist.

16. Bohrer nach einem der vorstehenden Ansprüche, **dadurch gekennzeichnet, dass** der Drallwinkel (δ) der Nebenschneiden mindestens 20° und höchsten 60° beträgt.

17. Bohrer nach einem der vorstehenden Ansprüche, **dadurch gekennzeichnet, dass** die Spitze des Bohrers Ausspitzungen (12) des Bohrerkerns aufweist, welche die Querschneide (13) verkürzen.

## Claims

1. A drill bit, in particular for the drilling of laminates, having at least two main chip flutes (2) separated from each other by corresponding webs (1), the free end faces of the webs (1) forming relief surfaces (3), and at least one secondary flute (4), which is formed in the periphery (5) of each of the webs (1) and divides the web (1) into a main web (1a) and a secondary web (1b), wherein a main cutting edge (6) is formed by the intersection of a main chip flute (2) and a relief surface (3a) on the main web (1a), and wherein a secondary cutting edge is formed by the intersection of the secondary flute with a relief surface (3b) on the secondary web (1b) following the main cutting edge in the direction of operation, the main cutting edges (6) extending to the nominal radius (R) of the drill, and wherein the secondary cutting edges (7) terminate at a distance (d) before the nominal radius, and axially project with respect to the main cutting edge by an axial overhang (X) at least along their radially outer section, **characterized in that** a tertiary cutting edge (8) on the secondary web (1b) is axially recessed with respect to the main cutting edge (6) and with respect to the secondary cutting edge (7), and in the projection on a radial plane covers the radial distance d) from the radially outer corner of the secondary cutting edge (7) to the nominal radius (R) of the drill

2. Drill according to one of the preceding claims, **characterized in that** the distance (d) is between 0.2% and 5% of the drill diameter or in absolute numbers between 0.01 mm and 0.2 mm.

3. Drill according to one of the preceding claims, **characterized in that** the main cutting edges define a peak angle in the range between 60° and 170° at least in by their entire radially outer portions.

4. Drill according to one of the preceding claims, **characterized in that** the axial overhang (X) has an amount between 0.1 mm and 0.8 mm.

5. Drill according to one of the preceding claims, **characterized in that** the axial overhang (X) along the secondary cutting edge increases with increasing radius.

6. Drill according to one of the preceding claims, **characterized in that** the radial extension of the secondary cutting edge (7) is less than half the drill radius (R) and in particular less than one third of the drill radius.

7. Drill according to one of the preceding claims, **characterized in that** the secondary cutting edges (7) extend over their length at a tip angle of between 180° and 200°.

8. Drill according to one of the preceding claims, **characterized in that** the main cutting edges are concave in the plan view along the drill axis (50) at least in the region of their radially outer half.

9. Drill according to one of the preceding claims, **characterized in that** the primary minor cutting edges (9) adjoining the main cutting edges (6) have a positive radial rake angle (α).

10. A drill according to one of the preceding claims, **characterized in that** the secondary minor cutting edges (11) adjoining the secondary cutting edges (7) have a negative radial cutting angle (β), preferably between 0 and -10°.

11. A drill according to one of the preceding claims, **characterized in that** the circumferential angle (γ1) between a primary minor cutting edge (9) and a secondary minor cutting edge (11) directly following the latter is smaller than the circumferential angle (γ2) between a secondary cutting edge and the immediately following primary minor cutting.

12. Drill according to one of the preceding claims, **characterized in that** the difference (γ2-y1) of the circumferential angle for a drill with two main cutting edges is at least 40 degrees.

13. Drill according to one of the preceding claims, **characterized in that** the difference (γ2 - y1) of the circumferential angle for a drill with two main cutting edges is at most 70 degrees.

14. Drill according to one of the preceding claims, **characterized in that** the cross-sectional area of the main chip flutes is at least twice the cross-sectional area of the secondary chip flutes.

15. Drill according to one of the preceding claims, **characterized in that** the drill is designed as a spiral drill.

16. Drill according to one of the preceding claims, **characterized in that** the twist angle (δ) of the secondary cutting edges is at least 20° and at most 60°.

17. A drill according to any one of the preceding claims, **characterized in that** the tip of the drill comprises web thinnings (12) of the drill core which shorten the dead end (13).

## Revendications

1. Foret, en particulier pour le perçage de laminés, avec au moins deux goujures principales (2) séparées les unes des autres par des nervures correspondantes (1), sachant que les côtés frontaux libres des nervures (1) forment des faces de dépouille (3), et avec au moins une goujure secondaire respective (4), qui est formée dans le dos de coupe (5) de chacune des nervures (1) et qui divise la nervure (1) en une nervure principale (1a) et une nervure secondaire (1b), sachant qu'une arête de coupe principale respective (6) est formée par l'intersection d'une goujure principale (2) avec une face de dépouille (3a) au niveau de la nervure principale (la), et sachant qu'une arête de coupe secondaire respective (7) est formée par l'intersection de la goujure secondaire (4) avec une face de dépouille (3b) au niveau de la nervure secondaire (1b), arête qui, considéré dans le sens de travail, est postérieure à l'arête de coupe principale (6), sachant que les arêtes de coupe principales (6) s'étendent jusqu'au rayon nominal (R), et sachant que les arêtes de coupe secondaires (7) se terminent à une distance (d) avant le rayon nominal et présentent, au moins dans leur partie radialement extérieure, un porte-à-faux axial (X) par rapport à l'arête de coupe principale, **caractérisé en ce qu'**une arête de coupe tertiaire (8) sur la nervure secondaire (1b) est axialement en retrait par rapport à l'arête de coupe principale (6) et par rapport à l'arête de coupe secondaire (7) et, dans la projection sur un plan radial, couvre la distance radiale (d) entre le coin radialement extérieur de l'arête de coupe secondaire (7) et le rayon nominal (R) du foret.

2. Foret selon la revendication précédente, **caractérisé en ce que** la distance (d) se situe entre 0,2% et 5% du diamètre du foret ou, en valeur absolue, est comprise entre 0,01 mm et 0,2 mm.

3. Foret selon l'une des revendications précédentes, **caractérisé en ce que** les arêtes de coupe principales définissent, au moins dans toute leur partie radialement extérieure, un angle au sommet situé dans la plage comprise entre 60° et 170°.

4. Foret selon l'une des revendications précédentes, **caractérisé en ce que** le porte-à-faux axial (X) est d'une valeur comprise entre 0,1 mm et 0,8 mm.

5. Foret selon l'une des revendications précédentes, **caractérisé en ce que** le porte-à-faux axial (X) augmente le long de l'arête de coupe secondaire avec un rayon croissant.

6. Foret selon l'une des revendications précédentes, **caractérisé en ce que** la longueur radiale de l'arête de coupe secondaire (7) est égale à moins de la moitié du rayon (R) du foret et en particulier à moins d'un tiers du rayon du foret.

7. Foret selon l'une des revendications précédentes, **caractérisé en ce que** les arêtes de coupe secondaires (7) s'étendent, sur toute leur longueur, sous un angle au sommet compris entre 180° et 200°.

8. Foret selon l'une des revendications précédentes, **caractérisé en ce que** les arêtes de coupe principales sont réalisées, en vue de dessus le long de l'axe (50) du foret, concaves au moins dans la région de leur moitié radialement extérieure.

9. Foret selon l'une des revendications précédentes, **caractérisé en ce que** les arêtes auxiliaires primaires (9), qui se raccordent aux arêtes de coupe principales (6), présentent un angle de coupe radial positif (α).

10. Foret selon l'une des revendications précédentes, **caractérisé en ce que** les arêtes auxiliaires secondaires (11), qui se raccordent aux arêtes de coupe secondaires (7), présentent un angle de coupe radial négatif (β), de préférence compris entre 0 et -10°.

11. Foret selon l'une des revendications précédentes, **caractérisé en ce que** l'angle inscrit (γ1) entre une arête auxiliaire primaire (9) et une arête de coupe auxiliaire secondaire (11) directement postérieure à celle-ci dans le sens de travail est plus petit que l'angle inscrit (y2) entre une arête de coupe auxiliaire secondaire et l'arête de coupe auxiliaire primaire directement postérieure à celle-ci.

12. Foret selon l'une des revendications précédentes, **caractérisé en ce que** la différence (γ2 - γ1) des angles inscrits est égale, pour un foret doté de deux arêtes de coupe principales, à au moins 40 degrés.

13. Foret selon l'une des revendications précédentes, **caractérisé en ce que** la différence (γ2 - γ1) des angles inscrits est égale, pour un foret doté de deux arêtes de coupe principales, à au plus 70 degrés.

14. Foret selon l'une des revendications précédentes, **caractérisé en ce que**, dans un plan de coupe perpendiculaire à l'axe du foret, la superficie de section des goujures principales est égale au moins au double, de préférence au moins au triple, de la superficie de section des goujures secondaires.

15. Foret selon l'une des revendications précédentes, **caractérisé en ce que** le foret est réalisé sous forme de foret hélicoïdal.

16. Foret selon l'une des revendications précédentes, **caractérisé en ce que** l'angle d'inclinaison (δ) des arêtes de coupe secondaires est égal à au moins 20° et au plus 60°.

17. Foret selon l'une des revendications précédentes, **caractérisé en ce que** la pointe du foret présente des amincissements (12) de l'âme du foret qui raccourcissent l'arête de coupe transversale (13).
